# EUROPÄISCHE PATENTSCHRIFT

(11) **EP 2 711 675 B1**
(45) Veröffentlichungstag und Bekanntmachung des Hinweises auf die Patenterteilung: **15.11.2017**
(21) Anmeldenummer: 12185340.2
(22) Anmeldetag: 21.09.2012
(51) Int. Cl.: G01K 1/14

(54) **Temperatursensor und Vorrichtung zur Befestigung und Positionierung des Temperatursensors, insbesondere für eine Batterie**
Temperature sensor and device for fixing and positioning the temperature sensor, particularly for a battery
Capteur de température et dispositif de fixation et de positionnement du capteur de température, notamment pour une batterie

(43) Veröffentlichungstag der Anmeldung: 26.03.2014
(73) Patentinhaber: Samsung SDI Co., Ltd., Yongin-si, Gyeonggi-do (KR)
(72) Erfinder: Fauland, David, 8522 Groß St. Florian (AT)
(74) Vertreter: Gulde & Partner

(56) Entgegenhaltungen:
- WO-A1-2012/102279
- CN-A- 102 455 007
- JP-A- S60 198 441
- US-A1- 2010 215 999

## Beschreibung

### Gebiet der Erfindung

Die vorliegende Erfindung betrifft einen Temperatursensor und eine Vorrichtung zur Befestigung und Positionierung des Temperatursensors an einer Batteriezelle eines Batteriesystems.

### Stand der Technik

Vorrichtungen zum Befestigen und Positionieren von Temperatursensoren in Batteriesystemen sind im Stand der Technik bekannt. Es werden hierbei zumeist Temperatursensoren verwendet, deren elektrischer Widerstand von dessen Umgebungstemperatur abhängig ist.

Insbesondere bei Verwendung von Lithium- Ionen Batteriezellen ist die Überwachung der Zell-Temperatur erforderlich. Die Temperatur in den Batteriezellen ändert sich aufgrund vieler Faktoren, wie beispielsweise der Umgebungstemperatur, sowie aufgrund elektrischer Belastungszyklen der Batteriezellen. Eine zu hohe Temperatur wirkt sich schädlich auf die Lebensdauer der Batteriezellen aus. Bei weiterer Erhöhung der Temperatur kann es zu einer exothermen Reaktion in den Batteriezellen kommen was zur Brandschädigung des Batteriesystems führen kann. Bei zu geringen Temperaturen wiederum ist die Leistungsfähigkeit der Batteriezellen begrenzt, was zu einer verringerten Leistungsaufnahmefähigkeit bei einem Ladevorgang führen kann.

Durch Erfassen der Temperatur der Batteriezellen kann diesen Effekten mit Hilfe von Kühl-/ Heizeinrichtungen einem Unterschreiten bzw. Überschreiten des unteren und oberen Schwellenwerts der Batteriezellen-Temperatur entgegen gewirkt werden.

Um zuverlässig Messwerte zu erfassen, ist es erforderlich die Oberflächentemperatur der Batteriezellen hinreichend genau zu messen, wobei für zuverlässige und vergleichbare Messwerte die Temperatur stets an einer definierten Position und Lage erfasst werden soll.

Aus der US8206032B2 ist eine Temperatursensor- Montageeinheit bekannt, zur Befestigung eines Temperatursensors an einem Montagezielelement in einer Montageöffnung an einer Montagewand, wobei die Temperatursensor- Montageeinheit ein Clip- Hauptelement umfasst, wobei eine Grundplatte auf einer Vorderseite der Montagewand positioniert werden kann. Die Grundplatte weist eine Installationsbohrung, welche ein Eindringen des Temperatursensors in eine Hinterseite der Montagewand erlaubt, auf. Ein elastisches Element ist ausgebildet um zwischen dem Clip- Hauptelement und der Montagewand angebracht zu werden.

Nachteilig bei dieser Ausführung ist, dass die Temperatursensor- Montageeinheit eine aufwändige Geometrie des Temperatursensors als auch des Clips zur Befestigung am Montagezielelement aufweist. Es ist weiters ein Dichtungselement erforderlich, welches zwischen dem Temperatursensor und dem Montagezielelement angeordnet ist. Ein weiterer Nachteil ist ein großer Bauraumbedarf, sowie dass keine einbauunabhängige Lage des Clips möglich ist. Der Temperatursensor hat keinen direkten Kontakt mit der Messoberfläche, wodurch eine höhere Trägheit bei einer dynamischen Temperaturerfassung auftritt.

Aus der JP S60 198441 A ist eine Vorrichtung zur Befestigung und Positionierung eines Temperatursensors bekannt, wobei der Temperatursensor in einem elastischen Körper eingebettet ist und mit einem Dünnfilmtape zusammenwirkt. Das Dünnfilmtape ist zwischen der auf Temperatur zu überwachenden Oberfläche und dem Temperatursensor angeordnet.

Es ist eine Aufgabe der Erfindung ein vereinfachtes Befestigungskonzept zur sicheren Befestigung und Positionierung eines Temperatursensors an einer Fläche einer Batteriezelle eines Batteriesystems bei gleichzeitig hoher Messgenauigkeit und schneller Ansprechzeit zu gewährleisten.

### Zusammenfassung der Erfindung

Die Lösung der Aufgabe erfolgt durch einen Temperatursensor und eine Vorrichtung zur Befestigung und Positionierung des Temperatursensors mit dem die Temperatur zumindest einer Batteriezelle eines Batteriesystems erfassbar ist gemäß den Merkmalen im Anspruch 1
Aufgrund einer Überpressung und der elastischen Eigenschaften des Gummielements wird der Sensor gegen die Fläche der Batteriezelle gedrückt und somit sicher und zuverlässig in Position gehalten. Das elastische Gummielement nimmt den Temperatursensor durch festes Umklammern sicher auf. Somit ist keine zusätzliche Befestigung wie z.B. Kleben erforderlich. Es wird auch gewährleistet, dass der Fühlerabschnitt des Temperatursensors permanent, aufgrund der toleranzausgleichenden Eigenschaften des Gummielements, in vollflächigen Kontakt mit der Oberfläche der Batteriezelle ist.

Die Ausnehmung im Gummielement ist so ausgebildet, dass sie im verbauten Zustand der Vorrichtung der zu messenden Batteriezellenfläche zugewandt ist.

Erfindungsgemäß kann die Vorrichtung auch an anderen Bauteilen entsprechend angeordnet sein.

Die Längsachse des Gummielements ist die Symmetrieachse normal zum annähernd kreisförmigen Querschnitt des Gummielements.

Weiterbildungen der Erfindung sind in den abhängigen Ansprüchen, der Beschreibung sowie den beigefügten Zeichnungen angegeben.

In einer bevorzugten Ausführungsform der erfindungsgemäßen Vorrichtung ist das Gummielement lösbar mit einem Halteelement verbindbar.

Das Halteelement kann ein separates Bauteil sein, welches mit einer Moduleinheit eines Batteriesystems verbindbar ist, oder integral mit der Moduleinheit ausgebildet sein.

In beiden Fällen ist gewährleistet, dass der Temperatursensor positionsgenau und sicher an der zu messenden Fläche befestigt werden kann. Die Befestigung des elastischen Gummielements kann dabei einfach z.B. durch Eindrücken in das Haltelement erfolgen, wodurch dieser Montagevorgang auch automatisiert erfolgen kann.

In einer weiteren bevorzugten Ausführungsform ist der Temperatursensor lösbar im Gummielement anbringbar.

Gemäß einer weiteren Ausführungsform der Erfindung ist der Fühlerabschnitt des Temperatursensors im Gummielement so angeordnet, dass das Gummielement den Fühlerabschnitt des Temperatursensors zumindest teilweise von der Umgebung abschirmt. Der Temperatursensor erhält dadurch im Wesentlichen über die vollflächige Kontaktstelle zur Oberfläche einer Zelle seine Messwerte.

Das hat den Vorteil, dass zumindest teilweise Umgebungseinflüsse ausgeschlossen werden, wodurch ein besseres Messergebnis erreicht werden kann. Der beschriebene Aufbau gewährleistet weiters minimale Messfehlereinflüsse in der Messkette. Besonders am Übergang von Sensor zur Messstelle können Messfehler entstehen, beispielsweise durch Einflüsse von thermisch isolierenden Luftspalten zwischen Sensor und Messstelle. Ist die Oberfläche der zu messenden Batteriezelle mit einer elektrisch isolierenden Folie versehen, so verhindert die Elastizität des Gummielements die Bildung eines Luftspalts zwischen Batteriezelle und elektrisch isolierender Folie.

In einer weiteren Ausführungsform weist der Temperatursensor einen Leitungsabschnitt auf, wobei der Leitungsabschnitt durch die Ausnehmung des Gummielements nach außen geführt wird.

Der Vorteil dieser Ausführung ist, dass der Temperatursensor ohne Montageaufwand entfernbar ist.

### Kurzbeschreibung der Zeichnungen

Die Erfindung wird im Folgenden beispielhaft unter Bezugnahme auf die Zeichnungen beschrieben.
- Fig. 1: zeigt schematisch eine Seitenansicht einer erfindungsgemäßen Vorrichtung für ein Batteriesystem.
- Fig. 2: zeigt schematisch einen Bereich der Seitenansicht und Draufsicht der Vorrichtung.
- Fig. 3: zeigt schematisch einen Teil der Seitenansicht der Vorrichtung.

### Detaillierte Beschreibung der Erfindung

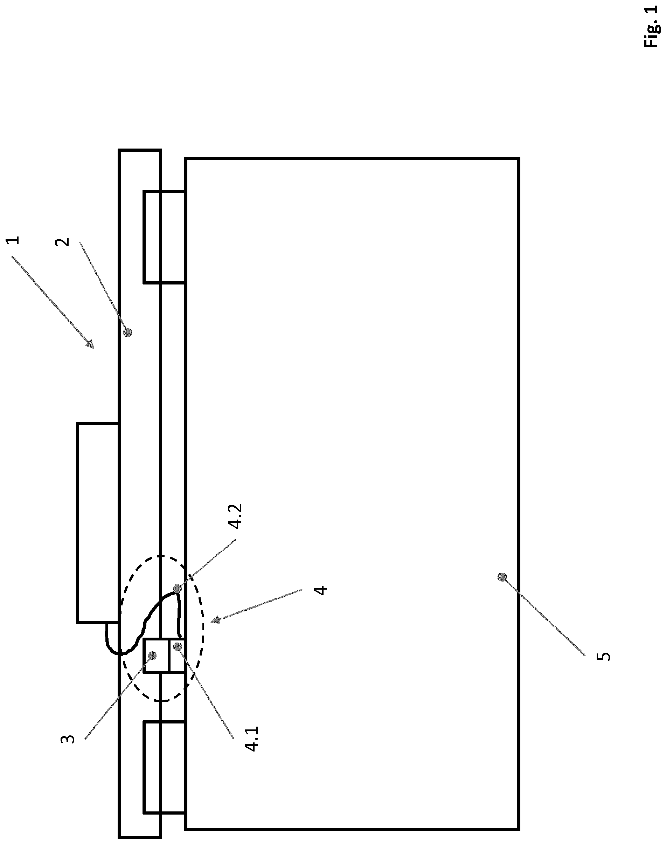

In Fig. 1 wird schematisch eine erfindungsgemäße Anordnung einer Vorrichtung 1, im Wesentlichen aus einem Haltelement 2 und einem Gummielement 3 bestehend, zur Befestigung und Positionierung eines Temperatursensors 4, im Wesentlichen aus einem Fühlerabschnitt 4.1 und einem Leitungsabschnitt 4.2 bestehend, an einer Batteriezelle 5 eines Batteriesystems, dargestellt. Solche Batteriesysteme sind vorzugsweise in Elektrofahrzeugen und Hybridfahrzeugen in Einsatz. Der Temperatursensor 4 wird mit einer Elektronikeinheit zum Auswerten der erfassten Temperaturwerte der Batteriezelle 5 über den Leitungsabschnitt 4.2 verbunden.

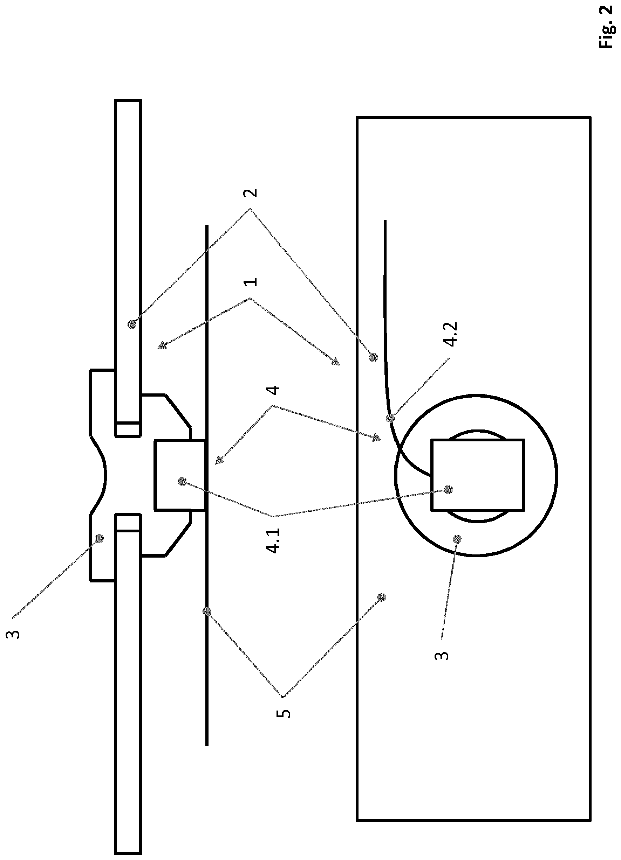

Fig. 2 zeigt schematisch eine weitere Seitenansicht sowie eine Draufsicht der Vorrichtung, wobei das im Halteelement 2 angeordnete Gummielement 3, im Schnitt dargestellt, den Fühlerabschnitt 4.1 des Temperatursensors 4 direkt und vollflächig gegen die Oberfläche einer Batteriezelle 5 drückt. Der Leitungsabschnitt 4.2 des Temperatursensors 4 wird ausschließlich durch eine Ausnehmung L (nicht dargestellt) des Gummielements 3 nach außen geführt. Die Vorrichtung 1 kann aus einem beliebigen Werkstoff, vorzugsweise Kunststoff oder metallisch, hergestellt sein. Das elastische Gummielement 3 kann auch als Teil des Haltelements 2 ausgebildet sein.

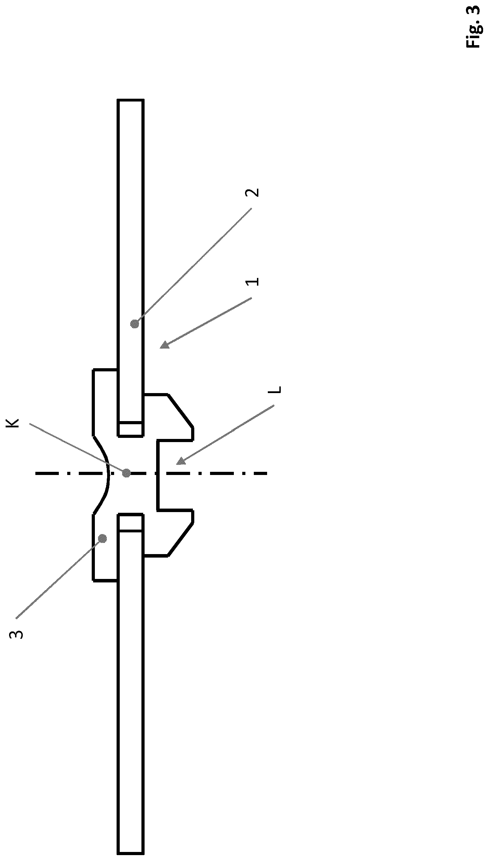

Fig. 3 zeigt schematisch eine weitere Seitenansicht der Vorrichtung 1, im Wesentlichen aus dem Halteelement 2 und dem Gummielement 3 bestehend, wobei das Gummielement 3 eine Längsachse K aufweist. In die Ausnehmung L ist der Fühlerabschnitt 4.1 des Temperatursensors 4 (beide nicht dargestellt), quer zur Längsachse K einführbar.

### Bezugszeichenliste

- 1: Vorrichtung
- 2: Haltelement
- 3: Gummielement
- 4: Sensor
- 4.1: Fühlerabschnitt
- 4.2: Leitungsabschnitt
- 5: Batteriezelle

- K: Längsachse
- L: Ausnehmung

## Patentansprüche

1. Temperatursensor und Vorrichtung zur Befestigung und Positionierung des Temperatursensors (4) an einer Batteriezelle eines Batteriesystems , wobei der Temperatursensor (4) im Wesentlichen aus einem Fühlerabschnitt (4.1) und einem Leitungsabschnitt (4.2) besteht,
wobei die Vorrichtung ein Halteelement (2) umfasst, wobei im Halteelement (2) ein Gummielement (3) angeordnet ist,
**dadurch gekennzeichnet, dass** das Gummielement (3) zumindest abschnittsweise eine annähernd zylindrische Form aufweist, und wobei das Gummielement (3) eine Ausnehmung (L) aufweist, in welche der Fühlerabschnitt (4.1) des Temperatursensors (4) durch festes umklammern sicher aufgenommen ist, wobei der Fühlerabschnitt (4.1) des Temperatursensors (4) normal zur Längsachse (K) des Gummielements (3) einführbar ist, und wobei durch das Gummielement (3) der Fühlerabschnitt (4.1) des Temperatursensors (4) in vollflächigem Kontakt gegen eine Fläche der Batteriezelle (5) drückbar und permanent in Position haltbar ist und der Temperatursensor (4) seine Messwerte im Wesentlichen über die vollflächige Kontaktstelle zur Oberfläche einer Zelle erhält.

2. Temperatursensor und Vorrichtung nach Anspruch 1,
**dadurch gekennzeichnet, dass** das Gummielement (3) lösbar mit dem Halteelement (2) verbindbar ist.

3. Temperatursensor und Vorrichtung nach Anspruch 1,
**dadurch gekennzeichnet, dass** der Temperatursensor (4) lösbar im Gummielement (3) anbringbar ist.

4. Temperatursensor und Vorrichtung nach Anspruch 1,
**dadurch gekennzeichnet, dass** das Gummielement (3) den Fühlerabschnitt (4.1) des Temperatursensors (4) zumindest teilweise vor Umgebungstemperatur abschirmt.

5. Temperatursensor und Vorrichtung nach Anspruch 1 ,
**dadurch gekennzeichnet, dass** der Leitungsabschnitt (4.2) durch die Ausnehmung (L) des Gummielements (3), insbesondere normal zur Längsachse (K) des Gummielements (3) nach außen geführt wird.

## Claims

1. Temperature sensor and device for fixing and positioning the temperature sensor (4) on a battery cell of a battery system, wherein the temperature sensor (4) substantially consists of a sensing portion (4.1) and a lead portion (4.2), wherein the device comprises a holding element (2), wherein a rubber element (3) is arranged in the holding element (2), **characterized in that** the rubber element (3) has an approximately cylindrical shape at least in some portions, and wherein the rubber element (3) has a recess (L) in which the sensing portion (4.1) of the temperature sensor (4) is securely accommodated by firm clasping, wherein the sensing portion (4.1) of the temperature sensor (4) can be introduced normal to the longitudinal axis (K) of the rubber element (3), and wherein the sensing portion (4.1) of the temperature sensor (4) can be pressed by the rubber element (3) into full-surface contact against a surface of the battery cell (5) and can be permanently held in position, and the temperature sensor (4) obtains its measured values substantially across the full-surface point of contact with the surface of a cell.

2. Temperature sensor and device according to claim 1, **characterized in that** the rubber element (3) can be detachably connected to the holding element (2).

3. Temperature sensor and device according to claim 1, **characterized in that** the temperature sensor (4) can be detachably fitted in the rubber element (3).

4. Temperature sensor and device according to claim 1, **characterized in that** the rubber element (3) at least partially shields the sensing portion (4.1) of the temperature sensor (4) against the ambient temperature.

5. Temperature sensor and device according to claim 1, **characterized in that** the lead portion (4.2) is routed outwards through the recess (L) of the rubber element (3), in particular normal to the longitudinal axis (K) of the rubber element (3).

## Revendications

1. Capteur de température et dispositif de fixation et de positionnement du capteur de température (4) contre une cellule de batterie d'un système de batterie, dans lequel le capteur de température (4) est essentiellement composé d'une partie de détecteur (4.1) et d'une partie de conduite (4.2),
dans lequel le dispositif comprend un élément de maintien (2), dans lequel un élément en caoutchouc (3) est agencé dans l'élément de maintien (2), **caractérisé en ce que** l'élément en caoutchouc (3) présente au moins partiellement une forme approximativement cylindrique, et dans lequel l'élément en caoutchouc (3) présente un évidement (L) dans lequel la partie de détecteur (4.1) du capteur de température (4) est logée de façon sûre par serrage ferme, dans lequel la partie de détecteur (4.1) du capteur de température (4) peut être insérée perpendiculairement à l'axe longitudinal (K) de l'élément en caoutchouc (3), et dans lequel au travers de l'élément en caoutchouc (3) la partie de détecteur (4.1) du capteur de température (4) peut être appuyée en contact sur toute la surface contre une superficie de cellule de batterie (5) et maintenue en position de façon permanente, et le capteur de température (4) reçoit ses valeurs mesurées essentiellement via le point de contact sur toute la surface par rapport à la surface d'une cellule.

2. Capteur de température et dispositif selon la revendication 1, **caractérisé en ce que** l'élément en caoutchouc (3) peut être relié de façon amovible avec l'élément de maintien (2).

3. Capteur de température et dispositif selon la revendication 1, **caractérisé en ce que** le capteur de température (4) peut être posé de façon amovible dans l'élément en caoutchouc (3).

4. Capteur de température et dispositif selon la revendication 1, **caractérisé en ce que** l'élément en caoutchouc (3) protège la partie de détecteur (4.1) du capteur de température (4) au moins pour partie de la température ambiante.

5. Capteur de température et dispositif selon la revendication 1, **caractérisé en ce que** la partie de conduite (4.2) est menée vers l'extérieur au travers de l'évidement (L) de l'élément en caoutchouc (3), en particulier perpendiculairement à l'axe longitudinal (K) de l'élément en caoutchouc (3).
